(19) **Europäisches Patentamt / European Patent Office / Office européen des brevets**

(11) **EP 4 400 639 A1**

(12) # EUROPEAN PATENT APPLICATION
published in accordance with Art. 153(4) EPC

(43) Date of publication:
**17.07.2024 Bulletin 2024/29**

(21) Application number: **22867304.2**

(22) Date of filing: **02.09.2022**

(51) International Patent Classification (IPC):
*D03D 1/02* (2006.01)   *B60R 21/235* (2006.01)
*D01F 6/60* (2006.01)   *D03D 15/283* (2021.01)

(52) Cooperative Patent Classification (CPC):
**B60R 21/235; D01F 6/60; D03D 1/02; D03D 15/283**

(86) International application number:
**PCT/JP2022/033132**

(87) International publication number:
**WO 2023/037982 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.09.2021 JP 2021146791**

(71) Applicant: **Toray Industries, Inc.
Tokyo 103-8666 (JP)**

(72) Inventors:
• **SUGANUMA, Yuta
Otsu-shi, Shiga 520-2141 (JP)**
• **NAGASE, Akimi
Okazaki-shi, Aichi 444-0943 (JP)**

(74) Representative: **Mewburn Ellis LLP
Aurora Building
Counterslip
Bristol BS1 6BX (GB)**

(54) **AIRBAG FABRIC AND AIRBAG**

(57)    Provided is a woven fabric for airbag using polyamide 410 which can be used as a substitute for a nylon 66 fabric and further as a bio-woven fabric for airbag, is excellent in heat resistance, and can suppress breakage caused by a high-temperature gas emitted from an inflator or a residue in an airbag cushion deployment test. This woven fabric for airbag comprises a polyamide 410 fiber.

**Description**

TECHNICAL FIELD

The present invention relates to a woven fabric for airbag and an airbag.

BACKGROUND ART

In the event of a collision accident of a vehicle, an airbag apparatus for occupant safety causes a gas generator (inflator) to actuate in response to an impact sensor to generate high-temperature and high-pressure gas in an airbag so as to instantaneously inflate the airbag with the gas, thereby protecting an occupant in the event of a collision. A fabric for an airbag is required to have low air permeability in order for the airbag to be smoothly deployed at the time of collision. Further, a woven fabric for airbag is required to have high thermal resistance in order to prevent breakage of the airbag itself. The vicinity of an inflator is particularly hot. Thus, the thermal resistance is important for avoiding breakage caused by melting. Further, an airbag is exposed to a high-temperature and high-humidity environment in summer, rainy season, or the like. Thus, an airbag capable of maintaining physical properties even under such an environment is desired.

A nylon 66 material has been mainly used as a fiber suitable for such characteristics required for a woven fabric for airbag. However, there are a few material manufacturers who can produce hexamethylenediamine constituting nylon 66 or adiponitrile being a raw material thereof, and hence shortage of supply often occurs. Thus, in recent years, an interest in a fiber material as a substitute for nylon 66 has been increasing.

For example, Patent Document 1 discloses a woven fabric for airbag that is improved in thermal resistance and instantaneous thermal deformation rate by producing an airbag polyethylene terephthalate fiber through adjustment of the elongation and strength of a polyethylene terephthalate fiber. Patent Document 2 discloses a method for providing a polyamide 410 fiber that is excellent in spinnability and fiber physical property through adjustment of the tensile elongation strength, the boiling water shrinkage, the fineness variation, and the toughness, which is calculated from the tensile elongation strength, of a polyamide 410 fiber, and an airbag is described as one of applications of the polyamide 410 fiber.

Meanwhile, a non-petroleum-derived fiber material has been eagerly desired with a recent increase in awareness regarding the environment on a global scale. Conventional synthetic fibers such as polyamide are mainly made of a material from petroleum resources. Thus, depletion of petroleum resources in the future and global warming caused by mass consumption of petroleum resources have been raised as major problems.

Through use of a raw material from plant resources that take in carbon dioxide from the atmosphere for growth, suppression of global warming by circulation of carbon dioxide can be expected, and there is a possibility that the problem of resource depletion can also be solved. Accordingly, in recent years, attention has been focused on a woven fabric for airbag derived from plant resources, that is, a biomass-derived woven fabric for airbag (hereinafter referred to as "bio-woven fabric for airbag"). There is a need for a bio-woven fabric for airbag also as a substitute for a nylon 66 fabric.

Various approaches to bio-woven fabric for airbags have been disclosed in the prior art documents. For example, Patent Document 3 describes a method for producing a bio-woven fabric for airbag of polyamide 56. Patent Document 4 describes a method for producing a bio-woven fabric for airbag with a biomass-derived high-melting-point alicyclic polyamide filament.

As can be seen in Patent Document 5 that discloses a method for producing a fiber of polyamide 410 or the like having a high biomass ratio, a polyamide 410 fiber is promising not only as a substitute for a nylon 66 fabric but also as a material of a bio-woven fabric for airbag.

PRIOR ART DOCUMENT

Patent Document

Patent Document 1: JP 2013-528719 A1
Patent Document 2: JP 2013-49930 A1
Patent Document 3: WO 2009/119302 A1
Patent Document 4: JP 2017-20126 A1
Patent Document 5: WO 2021/008942 A1

SUMMARY OF THE INVENTION

However, according to the technology described in Patent Document 1, a polyethylene terephthalate fiber having a fineness higher than that of nylon 66 must be used in order to increase the thermal resistance. Further, according to Patent Document 2, a woven fabric for airbag is not actually produced, and in addition, a polyamide 410 fiber has a melting point lower than that of a nylon 66 fiber. Thus, it is considered that the thermal resistance of the polyamide 410 fiber is inferior to that of the nylon 66 fabric. Furthermore, the bio-woven fabric for airbag described in Patent Document 3 has a melting point lower than that of nylon 66. Thus, it is considered that the thermal resistance is inferior to that of nylon 66. Further, in the bio-woven fabric for airbag described in Patent Document 4, a high-melting-point polymer composed of three or more kinds of monomers is used in order to increase the heat resistance. Thus, it is necessary to set the melt processing temperature higher, and hence the bio-woven fabric for airbag has not reached a substitute for a nylon 66 fabric. Further, also according to Patent Document 5, a woven fabric for airbag is not actually produced, and a melting point is lower than that of nylon 66. Thus, it is considered that the thermal resistance is inferior to that of a nylon 66 fabric. That is, there is no disclosure of a bio-woven fabric for airbag that is made of polyamide 410, which has a melting temperature lower than that of nylon 66 and is excellent in melt processability, but has a thermal resistance equivalent to or higher than that of a nylon 66 fabric and is not broken in an airbag cushion deployment test.

The present invention has been made in view of the problems of the prior art as described above, and an object of the present invention is to provide a woven fabric for airbag using polyamide 410, which can be used as a substitute for a nylon 66 fabric or as a bio-woven fabric for airbag, is excellent in thermal resistance, and can prevent breakage caused by high-temperature gas or a residue generated from an inflator in an airbag cushion deployment test.

As a result of extensive studies to solve the problems described above, the inventor of the present invention has found that the problems described above can be solved by a woven fabric for airbag including a polyamide 410 fiber, and has accomplished the present invention.

That is, a woven fabric for airbag according to an embodiment of the present invention that solves the problems described above is a woven fabric for airbag comprising a polyamide 410 fiber.

Further, an airbag according to an embodiment of the present invention that solves the problems described above is an airbag comprising the woven fabric for airbag described above.

EMBODIMENT FOR CARRYING OUT THE INVENTION

<Woven fabric for airbag>

A woven fabric for airbag of an embodiment of the present invention comprises a polyamide 410 fiber.

As for the crimp of the woven fabric for airbag of the present embodiment, a sum total of a crimp rate in a warp direction and a crimp rate in a weft direction is preferably 7.00% or more, more preferably 7.30% or more, still more preferably 7.50% or more. Further, the sum total of the crimp rate in the warp direction and the crimp rate in the weft direction is preferably 25.0% or less, more preferably 22.5% or less, still more preferably 20.0% or less. When the sum total of the crimp rates is 7.00% or more, in the woven fabric for airbag, a gap of multifilaments increases, heat transfer is suppressed, the fabric is three dimensional, and a contact surface with high-temperature gas or a residue decreases. Thus, the woven fabric for airbag is less liable to be melted or penetrated by heat. That is, even when a biomass-derived polyamide 410 filament having a melting temperature of less than 265°C, which is a melting point of nylon 66, is used, a woven fabric for airbag to be obtained may have a thermal resistance equivalent to or higher than that given when a nylon 66 filament is used. Further, when the sum total of the crimp rates is 25.0% or less, the woven fabric for airbag is excellent in airbag characteristics. The crimp rate can be improved by suppressing the weaving tension. A value of the crimp rate may be calculated based on the JIS L 1096:2010 8.7 B method.

The thermal resistance of the woven fabric for airbag of the present embodiment may be measured with a melt fall time per total weight in a thermal resistance test, which is also referred to as a hot rod test, of causing an iron rod heated to 350°C to fall onto a base fabric. The melt fall time is preferably 7.00 msec/(g/m$^2$) or more, more preferably 7.30 msec/(g/m$^2$) or more, still more preferably 7.50 msec/(g/m$^2$) or more. Further, the melt fall time is preferably 20.0 msec/(g/m$^2$) or less, more preferably 19.0 msec/(g/m$^2$) or less, still more preferably 18.0 msec/(g/m$^2$) or less. When the melt fall time is 7.00 msec/(g/m$^2$) or more, the melting of the base fabric due to high-temperature gas and a residue generated from the inflator during the deployment test, and the bursting of the airbag associated therewith are less liable to occur. Further, when the melt fall time is 20.0 msec/(g/m$^2$) or less, the woven fabric for airbag is less liable to be hardened, and thus is excellent in deployability when the woven fabric for airbag is formed into an airbag.

In the present embodiment, the thermal resistance may be measured by the following procedure. First, a test piece is mounted on a hot rod tester, a hot rod (iron rod) heated at 350°C for 1 hour is disposed above the test piece so as to be spaced apart from the test piece by 100 mm, and the hot rod is caused to freely fall toward the test piece side. The time $t_a$ (msec) from the moment of starting the free fall to the moment of contact with a bottom portion of a receptacle plate after complete passage through the test piece is measured, and an average value of $\Delta t$ obtained by subtracting the fall time $t_b$ of the rod, which is given under a state in which the test piece is not installed, from the time $t_a$, is set as the melt fall time in the thermal resistance test to the calculation formula given in the following formula (1), and divided by the total weight M $(g/m^2)$, and the thermal resistance $(msec/(g/m^2))$ can be calculated by the calculation formula shown in the following formula (2).

$$\text{(Formula (1))}$$

$$\text{Melt fall time } \Delta t \text{ (msec)} = t_a - t_b$$

$$\text{(Formula (2))}$$

$$\text{Thermal resistance } (msec/(g/m^2)) = \Delta t/M$$

A moisture content of the woven fabric for airbag of the present embodiment is preferably more than 0.5%, more preferably more than 0.6%. Further, the moisture content is preferably 2.5% or less, more preferably 2.4% or less. When the moisture content is more than 0.5%, the thermal resistance is less liable to be impaired. Meanwhile, when the moisture content is 2.5% or less, the woven fabric for airbag is less liable to deteriorate even under a hygrothermal environment. It is assumed that the moisture content falls within the range described above because a ratio of an amide group contained in a polymer is smaller in nylon 410 than in nylon 66. The moisture content may be calculated based on JIS L 1096:2010 8.10.

A dynamic air permeability increase rate of the woven fabric for airbag of the present embodiment obtained after a hygrothermal treatment for 408 hours under conditions with a temperature of 70°C and a humidity of 95% RH is preferably 25% or less, more preferably 22% or less, still more preferably 20% or less. When the dynamic air permeability increase rate is 25% or less, an airbag to be obtained is excellent in reliability under a hygrothermal environment. Further, it is assumed that, when the moisture content falls within the range described above, the deterioration of the woven fabric for airbag caused by hot water in the polymer is suppressed. In the present embodiment, the dynamic air permeability may be measured in accordance with ASTM D 6476-02, using an air permeability tester FX3350 manufactured by TEXTEST INSTRUMENTS dedicated for an airbag, with a test head of 400 $cm^3$. At the time of measurement, the pressure of compressed air (START PRESSURE) filled in the test head is adjusted so that the maximum pressure applied to the fabric is 100±5kPa. The compressed air filled in the test head is released and applied to a sample of the fabric, and the pressure and air permeability are measured over time. The hygrothermal treatment conditions are such that a sample is left and exposed for 408 hours under conditions with a temperature of 70°C and a humidity of 95% RH in a hygrothermal oven.

A tensile strength retention rate of the woven fabric for airbag of the present embodiment given after the hygrothermal treatment for 408 hours under conditions with a temperature of 70°C and a humidity of 95% RH is preferably 97.0% or more, more preferably 97.5% or more, still more preferably 98.0% or more. When the tensile strength retention rate given after the hygrothermal treatment is 97.0% or more, an airbag to be obtained is highly reliable under the hygrothermal environment. It is assumed that, when the moisture content falls within the range described above, deterioration of the woven fabric for airbag caused by hot water in the polymer is suppressed. In the present embodiment, the tensile strength can be measured based on ISO 13934-1 by removing yarns from both sides of the sample in each of the warp direction and the weft direction to have a width of 50 mm, pulling the sample with a constant-speed tension-type tester at a grip interval of 150 mm and a tensile speed of 200 mm/min until the test piece breaks, and measuring the maximum load until the test piece breaks. The hygrothermal treatment conditions are such that the sample is left and exposed for 408 hours in a hygrothermal oven under conditions with a temperature of 70°C and a humidity of 95% RH.

<Polyamide 410 Fiber>

The polyamide fiber of the present embodiment is a polyamide 410 fiber composed of a dicarboxylic acid, a diamine, and a polycondensate. The polyamide 410 fiber preferably contains a biomass-derived monomer in at least one of the dicarboxylic acid or the diamine. That is, the polyamide 410 fiber preferably contains a polyamide synthesized from a biomass-derived monomer. Further, a content of the polyamide synthesized from the biomass-derived monomer is preferably 25 wt% or more, more preferably 70 wt% or more, still more preferably 100 wt% in the polyamide 410 fiber. As the ratio of the biomass-derived monomer increases, the polyamide 410 fiber is less dependent on petroleum resources and causes less environmental load in terms of carbon dioxide circulation. The ratio of the biomass-derived monomer in the polyamide can be calculated as a weight ratio of the number of carbon atoms excluding amide groups. For example, when the dicarboxylic acid moiety of polyamide 410 is derived from biomass, the number of carbon atoms of the diamine moiety is 4, and the number of carbon atoms of the dicarboxylic acid (decanedioic acid) moiety is 10. Thus, the biomass ratio (wt%) is calculated as $10/(4+10) \times 100 = 71$ (wt%).

The dicarboxylic acid component is not particularly limited. For example, the dicarboxylic acid component is a decanedioic acid (sebacic acid) or the like. The dicarboxylic acid component may also be obtained from biomass-derived raw materials via a chemical process, a biochemical process, or a biological process.

The diamine component is not particularly limited. For example, the diamine component is 1,4-diaminobutane or the like, and can also be obtained from a biomass-derived raw material.

The polyamide 410 fiber of the present embodiment may contain additives such as a heat stabilizer, an antioxidant, a light stabilizer, a smoothing agent, an antistatic agent, a plasticizer, a thickener, a pigment, and a flame retardant for improvement in productivity in a spinning and stretching process or a processing process, or for improvement in characteristics.

As a method for determining whether or not the polyamide 410 fiber of the present embodiment, and a fiber structure, an airbag base fabric, and a resin pellet containing the polyamide 410 fiber are those synthesized from a biomass-derived compound, there is given ASTM D6866 based on the principle of C14 (radiocarbon) dating. Specifically, a concentration of the biomass ratio in a sample (polymer) may be specified by: a method of drying the sample to remove moisture, weighing the sample, causing $CO_2$ generated by burning of the sample to adsorb to an adsorbent through a chemical operation, and performing measurement through use of a liquid scintillation counter; a method of forming $CO_2$ generated by burning into a carbon graphite and performing measurement through use of an accelerator mass spectrometer; a method of synthesizing benzene from $CO_2$ generated by burning and performing measurement through use of a liquid scintillation counter; or the like.

In terms of mechanical properties such as elongation strength, a sulfuric acid relative viscosity, which is an index of the molecular weight, of the polyamide 410 resin of the present embodiment is preferably 2.0 to 5.0. Here, the sulfuric acid melt viscosity refers to a value obtained by measuring a raw material chip. As the sulfuric acid relative viscosity is higher, that is, as the molecular weight is higher, the strength of a fiber to be obtained is higher, which is preferable. Meanwhile, when the sulfuric acid relative viscosity falls within an adequate range, the polyamide 410 resin can be subjected to melt-spinning at an appropriate spinning temperature, and thermal decomposition of the polymer in a spinning machine is suppressed. Thus, the spinnability is improved, and the coloring of the fiber and the deterioration of the mechanical properties are suppressed, which is preferable. The sulfuric acid relative viscosity is more preferably 2.2 to 4.8, still more preferably 2.5 to 4.5. In the present embodiment, the sulfuric acid relative viscosity may be measured by a method described later.

A dispersity (Mw/Mn), which is an index of molecular weight distribution, of the polyamide 410 resin of the present embodiment is preferably 1.5 to 4.0. Here, Mw represents a weight average molecular weight, and Mn represents a number average molecular weight. Mw/Mn, which is a ratio of the average molecular weight and the number average molecular weight, indicates that, as a value thereof is smaller, the molecular weight distribution is narrower. When a resin that has a high sulfuric acid relative viscosity and has a narrow molecular weight distribution with Mw/Mn of 4.0 or less as described above is used, good fiber physical properties are obtained, which is preferable. Further, when Mw/Mn is 4.0 or less, generation of a low molecular weight compound, such as an oligomer, or a pyrolysis gas can be suppressed at the time of fiberization by melt spinning. Thus, spinnability and a production environment are not deteriorated. Mw/Mn is more preferably 3.8 or less, still more preferably 3.6 or less. Mw/Mn is preferably as small as possible, but is preferably 1.5 or more because the productivity is lowered if Mw/Mn is excessively small.

The polyamide 410 fiber of the present embodiment may be a monofilament or a multifilament. The polyamide 410 fiber is preferably a multifilament in consideration of airbag characteristics.

A cross-sectional shape of a single fiber of the polyamide 410 fiber of the present embodiment may be a circular cross-section or a flat cross-section.

A method for producing a yarn of the polyamide 410 fiber of the present embodiment is described. The polyamide 410 fiber of the present embodiment may be produced, with the polyamide resin produced as described above, by obtaining an undrawn yarn by a melt spinning method, and then drawing the undrawn yarn. A moisture content of a chip (raw material chip) of the polyamide resin is preferably 0.1 to 0.5%. When the moisture content falls within the range described above, the crystalline size given at the time of spinning is high, and the thermal resistance of the base fabric is improved in combination with a specified crimp rate. Further, when the moisture content is 0.1% or more, deterioration of the fluff grade of the polyamide 410 fiber is suppressed. Further, when the moisture content is 0.5% or less, water is less liable to bump from a portion where the molten polymer is fiberized, and the stringiness is less liable to be lowered. Thus, a yarn is easily obtained. The moisture content is more preferably 0.15 to 0.40%. The resin moisture content may be adjusted, for example, by adding a measured amount of water to the dried chips and stirring the mixture.

A spinning temperature in the melt spinning is preferably higher than a polymer melting point, and is preferably 260 to 320°C. When the spinning temperature is 320°C or lower, thermal decomposition of the polyamide 410 resin is suppressed. The spinning temperature is more preferably 310°C or lower, still more preferably 300°C or lower. Meanwhile, when the spinning temperature is 260°C or higher, the polyamide 410 resin exhibits sufficient melt fluidity, and discharge amounts at discharge holes become more uniform, enabling stretching at a high ratio. Further, the polyamide 410 resin is preferable because the stringiness is also improved. The spinning temperature is more preferably 265°C or higher, still more preferably 270°C or higher. In the yarn production process, an oil agent may be applied. A kind of the oil agent is not particularly limited.

The woven fabric for airbag of the present embodiment includes a polyamide 410 fiber as a weaving yarn (warp yarn and weft yarn). A kind of the warp yarn and the weft yarn is not particularly limited. For example, a kind of the warp yarn and the weft yarn is preferably the one having a biomass-derived polyamide 410 fiber as a main constituent component because characteristics can be imparted to the fabric. A mixing ratio of the polyamide 410 fiber of the present embodiment is preferably 50 wt% or more, more preferably 70 wt% or more, still more preferably 90 wt% or more.

In the woven fabric for airbag of the present embodiment, a synthetic fiber, a semi-synthetic fiber, or a natural fiber other than the polyamide 410 fiber may be mixed into the polyamide 410 fiber to such an extent that the effects of the present embodiment are not impaired.

In the present embodiment, the polyamide 410 fiber used as a ground yarn of the fabric is preferably a filament having a single fiber fineness of 1 to 7 dtex. When the single fiber fineness is 7 dtex or less, a gap between single fibers in the fabric is reduced, the filling effect of the fiber is further improved, and the air permeability can be reduced. Further, when the single fiber fineness falls within the range described above, the rigidity of the filament is moderately reduced, and a woven fabric for airbag to be obtained is improved in flexibility and may be improved in storability.

A total fineness of the polyamide 410 fiber used as the ground yarn of the fabric is preferably 20 to 900 dtex. When the total fineness is 20 dtex or more, the strength of a woven fabric for airbag to be obtained is likely to be maintained. Further, when the total fineness is 900 dtex or less, a woven fabric for airbag to be obtained is likely to maintain compactness during storage and low air permeability. The total fineness is more preferably 25 dtex or more, still more preferably 30 dtex or more. Further, the total fineness is more preferably 800 dtex or less, still more preferably 700 dtex or less. When the total fineness falls within the range described above, a woven fabric for airbag to be obtained may be improved in strength, slippage resistance, low air permeability, flexibility, and compact storage ability with good balance.

A boiling water shrinkage of the polyamide 410 fiber used as the ground yarn of the fabric is preferably 3 to 15%. When the boiling water shrinkage is 15% or less, the degree of orientation of the molecular chain of the polyamide 410 fiber is not extremely reduced during the treatment with boiling water, and the strength is less liable to be reduced even after the treatment. Further, the fiber can be sufficiently shrunk by the processing of thermally shrinking the woven fabric for airbag. Thus, a flexible fabric is likely to be obtained. Meanwhile, when the boiling water shrinkage is 3% or more, the weave density of the woven fabric for airbag can be increased by thermal shrinking. As a result, the weaving tension in a weaving process is suppressed to an adequate range, and a high-density fabric is likely to be obtained. This eliminates the need to weave under high tension in the production of a high-density fabric. Thus, occurrence of fluffing and shrinkage in the weaving process is suppressed, and a fabric with less defects can be produced with good process passability.

The tensile strength of the polyamide fiber constituting the fabric of the present embodiment, particularly the polyamide 410 multifilament used as the ground yarn, is preferably 5.0 to 10.0 cN/dtex for both the warp yarn and the weft yarn for the purpose of satisfying the mechanical properties required for an airbag and from the viewpoint of yarn production operation. When the tensile strength is 5.0 N/dtex or more, the polyamide fiber is likely to have good passability and handleability in high-order processing processes such as weaving and knitting. Further, in the polyamide fiber, for example, even when the weaving tension in the weaving process is increased, fluffing is less liable to occur, and a high-density fabric is likely to be obtained with good process passability. The tensile strength is more preferably 5.5 cN/dtex or more, still more preferably 6.0 cN/dtex or more. The tensile strength is preferably as high as possible. However, when an attempt is made to produce a fiber having an excessively high strength, yarn breakage or fluffing tends to be liable to occur in the spinning process or the stretching process. Thus, the tensile strength is more preferably 9.5 cN/dtex or less, still more preferably 9.0 cN/dtex or less.

A tensile elongation of the polyamide 410 fiber of the present embodiment is preferably from 15 to 50%. When the tensile elongation is 15% or more, occurrence of fluffing in the polyamide 410 fiber is likely to be suppressed in the spinning process or the stretching process. Further, the polyamide 410 fiber is improved in process passability in processes such as twisting, warping, weaving, and knitting processes which are subsequent to the spinning process and the stretching process. Further, the tensile elongation is preferably 50% or less in order to suppress deformation of the fiber under low stress and to prevent dyeing defects of a final product due to weft shrinkage or the like during weaving. The tensile elongation is more preferably 17% or more, still more preferably 20% or more. Further, the tensile elongation is more preferably 48% or less, still more preferably 45% or less.

The weave of the woven fabric for airbag of the present embodiment is not particularly limited. For example, the fabric weave is a plain weave, a twill weave, a satin weave, and variations thereof, a multiaxial weave, or the like. Among those, for use in an airbag, the fabric weave is preferably a plain weave from the viewpoint of excellent mechanical properties particularly required and thinness. The weave density may vary depending on whether the fabric is resinated or non-resinated, the fineness of the yarn, or the like. A cover factor is preferably 1,500 to 2,500 in order to achieve both low air permeability and high slippage resistance. In general, when the cover factor falls within the range described above, the woven fabric for airbag is likely to have an appropriate total weight and is less liable be coarse and hard while appropriately maintaining mechanical properties (tensile strength, tear strength, and the like) required for an airbag. When the cover factor is 1,500 or more, the total weight of the base fabric is not excessively small, and misalignment is less liable to occur. Meanwhile, when the cover factor is 2,500 or less, the total weight of the base fabric is not excessively large, and the base fabric is less liable to be coarse and hard. In the present embodiment, the cover factor (CF) is a value calculated from the total fineness and the weave density of the yarn used for the warp or the weft, and is defined by the following formula (3). In the formula (3), Dw represents a warp total fineness (dtex), Nw represents a warp density (yarns/2.54 cm), Df represents a weft total fineness (dtex), and Nf represents a weft density (yarns/2.54 cm).

(Formula (3))

$$CF=(Dw \times 0.9)^{1/2} \times Nw+(Df \times 0.9)^{1/2} \times Nf$$

The tensile strength of the fabric of the present embodiment in each of the warp direction and the weft direction is preferably 1,500 N/50 mm or more, more preferably 1,800 N/50 mm or more, still more preferably 2,000 N/50 mm. The tensile strength of the fabric in each of the warp direction and the weft direction is preferably 4,500 N/50 mm or less, more preferably 4,000 N/50 mm or less. When the tensile strength falls within the range described above, the fabric is more excellent in mechanical properties. The tensile strength of the fabric may be calculated based on ISO 13934-1.

The tensile elongation of the fabric of the present embodiment in each of the warp direction and the weft direction is preferably 15% or more, more preferably 17% or more, still more preferably 20%. The tensile strength of the fabric in each of the warp direction and the weft direction is preferably 45% or less, more preferably 40% or less. When the tensile elongation falls within the range described above, the fabric is excellent in impact absorbability. The tensile strength of the fabric may be calculated based on ISO 13934-1.

The tear strength of the fabric of the present embodiment in each of the warp direction and the weft direction is preferably 80 N or more, more preferably 100 N or more. The tear strength of the fabric in each of the warp direction and the weft direction is preferably 500 N or less, more preferably 450 N or less. When the tear strength falls within the range described above, an airbag to be obtained is less liable to be torn when stress or the like is concentrated when receiving an occupant at the time of deployment. As a result, the deployed airbag is prevented from having an air passage portion. The tear strength of the fabric may be calculated based on ISO 13937-2.

A slippage resistance value of the fabric of the present embodiment in each of the warp direction and the weft direction is preferably 150 N or more, more preferably 200 N or more. Further, the slippage resistance value of the fabric in each of the warp direction and the weft direction is preferably 900 N or less, more preferably 800N or less. When the slippage resistance value falls within the range described above, in an airbag to be obtained, the misalignment of the sewn portion is small. As a result, in an airbag to be obtained, the hot gas of the inflator is less liable to leak at the time of deployment, the internal pressure is likely to be maintained, and melting of the base fabric at the sewn portion is prevented. The slippage resistance value of the fabric may be calculated based on ASTM D 6479-02.

The dynamic air permeability of the fabric of the present embodiment is preferably 500 mm/s or less. When the dynamic air permeability falls within the range described above, an airbag that is excellent in internal pressure retainability with less energy loss at the time of airbag deployment can be obtained. The dynamic air permeability of the fabric may be calculated based on ASTM D 6476-02.

A bending resistance of the fabric of the present embodiment is preferably 5 N or more, more preferably 7 N or more, still more preferably 9 N or more. Further, the bending resistance is preferably 25 N or less, more preferably 20 N or less, still more preferably 17 N or less. When the bending resistance falls within the range described above, the fabric can easily be sewn. Further, the workability at the time of folding and storing an obtained airbag cushion is excellent. The bending resistance of the fabric may be calculated based on the circular bend method of ASTM D 4032-94.

<Method for Producing Woven fabric for airbag>

In a method for producing a fabric of the present embodiment, first, warp yarns having the total fineness described above in relation to the fabric are warped and installed in a loom. Similarly, weft yarns are installed in the loom. The loom is not particularly limited. For example, the loom is preferably a loom with a full-width temple device in a case of weaving a high-density fabric. Examples of the loom include a water jet loom, an airjet loom, and a rapier loom. Among these, the loom is preferably a water jet loom because high-speed weaving can be performed in a relatively easy manner and productivity can easily be improved.

At the time of weaving, the tension applied to each warp yarn constituting the ground part of the fabric is preferably adjusted to fall within a range of 0.15 to 0.50 cN/dtex. When the warp tension is 0.15 cN/dtex or more, the binding force for the weft yarns during weaving is adequate, and hence a fabric in which the warp and the weft have the same density may be obtained. Meanwhile, when the warp tension is 0.50 cN/dtex or less, the contact areas (degree of adhesion) between the warp and the weft in the fabric are likely to be adequate. Thus, fluffing of the warp is likely to be prevented, and the weaving property is excellent. A method for adjusting the warp tension is not particularly limited. For example, the warp tension can be adjusted by a method of adjusting the warp feeding speed of the loom, a method of adjusting the weft picking density, or the like. Whether or not the warp tension falls within the range described above may be checked, for example, by measuring the tension applied to each warp yarn at the warp beam and the central portion of the back roller during the operation of the loom with a tension measuring device. In particular, in order to increase the crimp rate, the warp tension is preferably 0.20 to 0.5 cN/dtex. When the tension is 0.20 N/dtex or more, the gap between the multifilaments can be increased, and a fabric having good heat resistance may be obtained.

At the time of weaving the fabric of the present embodiment, in the selvage portion, the intertwining yarn and the supplemental yarn are preferably used at the selvage end.

The materials and types of the intertwining yarn and the supplemental yarn are suitably selected depending on a type and a weaving density of the ground yarn. The materials of the intertwining yarn and the supplemental yarn are not particularly limited. For example, the material is preferably a polyamide fiber or a polyester fiber, which is excellent in mass productivity and economic efficiency. Further, the type is a monofilament, a multifilament, a spun yarn, or the like. The spun yarn is preferably a multifilament or a monofilament from the viewpoint of hardly causing a trouble in the fluffing guide and the heald.

After the weaving is finished, the obtained fabric is subjected to a drying treatment as needed. The drying temperature is typically 80°C or higher. When the drying temperature is 80°C or higher, the dry heat shrinkage of the fabric is reduced, and the dimensional stability is improved. As a result, the fabric can be suitably used as an airbag.

Next, the fabric is suitably subjected to processing such as scouring and heat setting. The scouring temperature in the scouring process is preferably 30°C or higher, more preferably 45°C or higher. When the heat is applied, the intertwining yarn and the supplemental yarn contract more than the ground yarn, and the selvage looseness may be suppressed. When the scouring temperature is 30°C or higher, residual strain is removed from the fabric, and the dimensional stability may be improved.

The heat setting temperature in the heat setting is preferably a temperature at which residual strain in the fabric after weaving can be removed and large shrinkage of the fabric can be suppressed, as in the scouring. Specifically, the heat setting temperature is preferably 110°C or higher, more preferably 120°C or higher. Further, the heat setting temperature is preferably 190°C or lower. When the heat setting temperature falls within the range described above, the dimensional stability of the base fabric to be obtained may be improved, the intertwining yarn and the supplemental yarn are shrunk more than the ground yarn, and the selvage looseness may be suppressed.

The fabric having been subjected to the processes described above may be a coated fabric suitably coated with a resin or an elastomer. When the fabric of the present embodiment is coated, air impermeability may be provided to the fabric. In the case of performing coating, the coating amount is preferably about 5 to 35 g/m$^2$. The resin or the elastomer is preferably the one having heat resistance, cold resistance, and flame retardancy. As the resin or elastomer, for example, a silicone resin, a polyamide-based resin, a polyurethane resin, a fluororesin, or the like is suitable.

Alternatively, the fabric may be used as a non-coated fabric without being coated.

One embodiment of the present invention has been described above. The present invention is not particularly limited to the embodiment described above. The embodiment described above mainly describes the invention having the following configuration.

(1) A woven fabric for airbag, comprising a polyamide 410 fiber.

(2) The woven fabric for airbag according to Item (1), wherein a sum total of a crimp rate in a warp direction and a crimp rate in a weft direction is 7.00 to 25.0%.

(3) The woven fabric for airbag according to Item (2), wherein a melt fall time per total weight in a heat resistance test of allowing an iron rod heated to 350°C to fall onto a base fabric is 7.00 to 20.0 msec/(g/m$^2$).

(4) The woven fabric for airbag according to any one of Items (1) to (3), wherein a dynamic air permeability increase rate of the fabric after a hygrothermal treatment for 408 hours under conditions with a temperature of 70°C and a humidity of 95% RH is 25% or less.

(5) The woven fabric for airbag according to any one of Items (1) to (4), wherein a tensile strength retention rate of the fabric after a hygrothermal treatment for 408 hours under conditions with a temperature of 70°C and a humidity of 95% RH is 97.0% or more.

(6) The woven fabric for airbag according to any one of Items (1) to (5), wherein a moisture content of the fabric as measured in accordance with JIS L 1096:2010 8.10 is more than 0.5% and 2.5% or less.

(7) The woven fabric for airbag according to any one of Items (1) to (6), wherein the polyamide 410 fiber contains a polyamide synthesized from a biomass-derived monomer, and a content of the polyamide synthesized from the biomass-derived monomer is 25 wt% or more in the polyamide 410 fiber.

(8) An airbag comprising the woven fabric for airbag of any one of Items (1) to (7).

EXAMPLE

Now, description is made of the present invention in detail by way of Examples. The present invention is not limited to these Examples. In the following Examples, the respective characteristic values were calculated by the following methods.

<Methods of Calculating Characteristic Values>

(Melting Point)

A melting point was measured using a differential scanning calorimeter, model DSC-7, manufactured by PerkinElmer, Inc. That is, 10 mg of a sample was increased in temperature to 280°C at a temperature increasing rate of 16°C/min, and held for 5 minutes after increasing the temperature. After that, the sample was rapidly decreased in temperature to a room temperature, and then was increased in temperature again to 280°C at a temperature increasing rate of 16°C/min. In a differential calorimetric curve obtained by increasing the temperature again, a peak indicating an extreme value on an endothermic side was determined as a melting peak, and a temperature giving the extreme value was defined as a melting point (°C). When a plurality of extreme values was present, the extreme value on the high temperature side was defined as the melting point. The measurement was performed three times, and an average value of the measurements was defined as the melting point.

(Resin Moisture Content)

The measurement was performed using a combination of a moisture measuring device AQ-2200 manufactured by HIRANUMA Co, Ltd. (previously Hiranuma Sangyo Co., Ltd.), and a moisture vaporizer EV-2000 manufactured by HIRANUMA Co, Ltd. (previously Hiranuma Sangyo Co., Ltd.). That is, the moisture in a sample chip was extracted using EV-2000, and a moisture content was measured using AQ-2200. The sample was 1.5 g, and a nitrogen gas used for water vaporization was 0.2 L/min.

The measurement conditions were as follows.

·Step 1 temperature 210°C, time 21 minutes
·Calcination time 0 minutes
·End B.G. 0 $\mu$g
·Cooling time 1 minute
·B.G. stabilization counts 30 times
·Back purge time 20 seconds

(Sulfuric Acid Relative Viscosity)

The flow time (T1) at 25°C was measured using an Ostwald viscometer under a condition with a concentration of 0.01 g/ml in 98% sulfuric acid. Subsequently, the flow time (T2) of the sulfuric acid having a concentration of 98 wt% alone was measured. A ratio of T1 to T2, that is, T1/T2 was defined as the sulfuric acid relative viscosity. The measurement was performed three times, and an average value of the measurements was defined as the sulfuric acid relative viscosity.

(Mw/Mn)

Using gel permeation chromatography (GPC), the weight-average molecular weight Mw and the number-average molecular weight Mn were measured for a solution obtained by dissolving 2.5 mg of the polyamide resin in 4 ml of hexafluoroisopropanol (with 0.005 N of sodium trifluoroacetate added) and filtering the solution through a filter of 0.45 $\mu$m, and Mw/Mn was calculated. The measurement was performed three times, and an average value was defined as Mw/Mn. The measurement conditions were as follows.

·GPC apparatus: Waters515 (manufactured by Waters Corporation)
·Column: Shodex HFIP-806M (2 connected) + HFIP-LG
·Solvent: hexafluoroisopropanol (with 0.005 N of sodium trifluoroacetate added)

·Temperature: 30°C
·Flow rate: 0.5 ml/min
·Injection amount: 0.1 ml
·Detector: differential refractometer, Waters410 (manufactured by Waters Corporation)
·Molecular weight calibration: polymethyl methacrylate

(Total Fineness)

The total fineness was calculated by measuring the true fineness at a predetermined load of 0.045 cN/dtex in accordance with the JIS L 1013:2010 8.3.1 A method.

(Number of Filaments)

The number of filaments was calculated based on the method of JIS L 1013:2010 8.4.

(Yarn Strength/Elongation)

An S-S curve of the sample (filament or disintegrated yarn) was measured using TENSILON UCT-100 manufactured by Orientec Co., Ltd. in accordance with the measurement method for tensile strength and elongation described in JIS L 1017:1995, paragraph 7.5, (1) Standard test. Prior to the measurement, the sample was left for 48 hours under an environment with a room temperature of 25°C and a relative humidity of 55% in a no-load state for humidity conditioning. Then, an S-S curve of the sample was measured under the same environment with an initial load of 0.08 cN/dtex, a sample length of 250 mm, and a tensile speed of 300 m/min. The strength was determined by dividing the strength at the point indicating the maximum strength in the S-S curve by the total fineness. The elongation was determined by dividing the elongation at the point indicating the maximum strength in the S-S curve by the sample length and multiplying the quotient by 100.

(Boiling Water Shrinkage)

The boiling water shrinkage was calculated based on the method of the JIS L 1013:2010 8.16.A method.

(Weaving Density)

The weaving density of each of the warp and the weft was calculated based on JIS L 1096:2010 8.6.1. Specifically, the sample was placed on a flat table, unnatural wrinkles and tension were removed, the numbers of warp yarns and weft yarns in the section of 2.54 cm were counted at five different positions, and an average value of the respective counts was calculated.

(Crimp Rate of Fabric)

The crimp rate of the fabric was calculated based on the JIS L 1096:2010 8.7 B method as follows. A sample was cut out from the central portion of the base woven fabric for airbag, the initial load (cN) was set by the calculation formula shown in the following formula (4), and the crimp rate (%) in each of the warp direction and the weft direction was calculated by the calculation formula shown in the following formula (5).

(Formula (4))

$$IG = T \times 0.1$$

In the formula (4), IG represents an initial load (cN), and T represents a total fineness (dtex) of a disintegrated yarn.

(Formula (5))

$$Cw = (L - 200)/200 \times 100$$

In the formula (5), Cw represents a crimp rate (%), and L represents a length (mm) as measured under the initial load (IG) calculated by the formula (4).

(Total weight of Airbag Base Fabric)

The total weight of the base woven fabric for airbag was determined based on the JIS L 1096:2010 8.3 A method as follows. Samples (dimension of 25 cm×25 cm) were created for three different positions of the base woven fabric for airbag, a mass per square meter was calculated using an electronic balance, and an average value was defined as the total weight ($g/m^2$).

(Tensile Strength/Elongation)

The tensile strength was determined based on ISO 13934-1. Five test pieces were taken in each of the warp direction and the weft direction, yarns were removed from both sides in the width direction to obtain a width of 50 mm, the test piece was pulled with a constant-speed tension-type tester at a grip interval of 150 mm and a tensile speed of 200 mm/min until the test piece broke, the maximum load and the elongation until breakage were measured, and an average value was calculated.

(Post-Hygrothermal Tensile Strength Retention Rate)

After the base fabric sample was treated for 408 hours in a hygrothermal oven with a temperature of 70°C and a humidity of 95% RH, the tensile strength described above was evaluated, the ratio of the tensile strength given after the hygrothermal treatment to the tensile strength given before the hygrothermal treatment was calculated, and an average value in each of the warp direction and the weft direction was defined as the post-hygrothermal tensile strength retention rate. The humidity is a relative humidity.

(Tear Strength)

The tear strength was calculated based on ISO 13937-2. Specifically, for the tear strength, test pieces (dimension of 15 cm×20 cm) were created from five different positions of the fabric, and a cut line of 10 cm orthogonal to the short side was formed at the center of the short side (position of 7.5 cm from the end). This sample was clamped by a material tester (Instron (trademark, the same applies hereinafter) 5965, manufactured by Instron Corporation) using a clamp having a width equal to or larger than 15 cm such that each piece (the portion where the cut was formed (portion of 7.5 cm×10 cm)) was perpendicular to the upper and lower clamps, and a test was performed at a tensile speed of 10 cm/min until the sample was torn by 9 cm. The obtained stress-strain curve was divided into four parts in the range of from the first maximum point to the test end point, and the average of the maximum points was obtained in the remaining portion (3/4 portion) excluding the first 1/4 portion. This test was repeated three times, and an average value was defined the tear strength (N). In this test method, the maximum point was defined as a point at which the average stress at the remaining portion (3/4 portion) changed from the immediately preceding recessed portion by 10% or more of the average residual stress.

(Slippage Resistance)

A slippage resistance (N) was determined based on ASTM D 6479-02. Test pieces (dimension of 30 cm×5 cm) were taken from five different positions of the fabric, the test pieces were measured with a material tester (Instron (trademark) 5965, Instron Corporation), and an average value was calculated.

(Dynamic Air Permeability)

In accordance with ASTM D 6476-02, using an air permeability tester FX3350 manufactured by TEXTEST Co., Ltd. and dedicated for an airbag was used, with a test head of 400 $cm^3$, the pressure of compressed air (START PRESSURE) filled in the test head was adjusted so that the maximum pressure applied to the fabric was 100±5 kPa, the compressed air filled in the test head was released and applied to a sample of the fabric, and the pressure and air permeability were measured over time. The measurement was performed at six different positions of the sample. In a pressure-dynamic air permeability curve obtained as a result of the measurement, an average flow rate (mm/sec) within the range of from an upper limit pressure (UPPER LIMIT: 70 kPa) to a lower limit pressure (LOWER LIMIT: 30kPa) after reaching the maximum was determined, and an average value was determined as the dynamic air permeability (mm/sec).

(Post-hygrothermal Dynamic Air Permeability Increase Rate)

After the base fabric sample was treated for 408 hours in a hygrothermal oven with a temperature of 70°C and a humidity of 95% RH, the dynamic air permeability was evaluated, and an increase rate of the tensile strength given after the hygrothermal treatment relative to the tensile strength given before the hygrothermal treatment was defined as the post-hygrothermal dynamic air permeability increase rate. The humidity is a relative humidity.

(Bending Resistance)

The bending resistance was determined based on the circular bend method of ASTM D 4032-94 as follows. Test pieces (dimension of 20 cm×10 cm) were taken from five different positions of the airbag base fabric, the test piece was folded in two at the center in the longitudinal direction, the test pieces were measured with a measuring device (in accordance with ASTM D 4032), and an average value was calculated.

(Melt Fall Time in Thermal Resistance Test)

The test pieces were cut out with the size of 150 mm×150 mm along the warp and the weft at five different positions of the fabric ground portion, and then the test piece was mounted on a hot rod tester (manufactured by MEGA SCIENCE). Further, a hot rod (made of steel, 10 mm in diameter, 82 mm in length, 50 g in weight, and 55 W/m·K in thermal conductivity) was heated at 350°C for 1 hour in the apparatus described above, disposed above the sample so as to be 100 mm apart from the sample, and caused to freely fall toward the sample at the position described above. The time $t_a$ from the moment of starting the free fall to the moment of contact with a bottom portion of a receptacle plate after complete passage through the test piece was measured, $\Delta t$ obtained by subtracting the fall time $t_b$ of the rod, which is given under a state in which the test piece is not installed, from the time $t_a$ was calculated five times, and an average value thereof was calculated as the melt fall time in the thermal resistance test.

(Moisture Content of Fabric)

The moisture content was calculated based on JIS L 1096:2010 8.10.

(Deployment Test)

A module was assembled using an airbag for a driver's seat, a pyrotechnic inflator (output of 190 kpa), a pressure gauge, an amplifier, and a metal fixture, and a deployment test was performed. The deployment test was performed under an environment at 25°C, and the presence or absence of melting of the woven fabric for airbag during deployment, the presence or absence of opening of the sewn portion, and the presence or absence of bursting were observed. The evaluation was made by determining the presence or absence of breakage of the woven fabric for airbag. A result with the absence of melting of the woven fabric for airbag, the absence of opening of the sewn portion, and the absence of bursting was evaluated as "excellent". A result with the absence of melting of the woven fabric for airbag, the presence of opening of the sewn portion, and the absence of bursting was evaluated as "good". A result with the presence of melting of the woven fabric for airbag, the absence of opening of the sewn portion, and the absence of bursting was evaluated as "pass". A result with the presence of melting of the woven fabric for airbag and the presence of bursting was evaluated as "fail".
The airbag for a driver's seat was produced as follows.
Two circular main body panels having an outer diameter of φ640 mm and three circular reinforcing fabric panels having an outer diameter of φ240 mm were taken from the prepared airbag base fabric. An inflater mounting port of φ76 mm was provided at the center of the body panel and the reinforcing cloth panel.
After that, mounting ports of the three reinforcing fabric panels and the one main body panel were superposed on one another, and positions of <p85 mm, φ180 mm, and φ196 mm from the center of the mounting were sewn in a circular shape by lockstitch with a pitch of 2.5 mm. After that, another main body panel was superposed on the four superposed panels described above such that the warp direction was shifted by 45 degrees, and a position of φ610 mm from the center of the mounting port was circularly sewn by double chain stitch with a pitch of 2.5 mm.
The obtained bag was provided with bolt holes required for fixing with a fixing metal fitting, and then the bag was reversed such that the reinforcing cloth was on the inner side, thereby obtaining an airbag for a driver's seat.

<Example 1>

(Warp Yarn and Weft Yarn)

A Nylon 410 resin was added with 0.15% of moisture and subjected to melt-spinning. As the warp yarn and the weft yarn, a non-twisted synthetic fiber filament was prepared. The non-twisted synthetic fiber filament was composed of a polyamide 410 fiber with a 100% biomass-derived sebacic acid (71 wt% derived from biomass), had a circular cross-sectional shape, was composed of a fiber 136 filament having a single fiber fineness of 2.7 dtex, had a total fineness of 362 dtex, a yarn strength of 7.80 cN/dtex, an elongation of 23.0%, and a boiling water shrinkage of 3.5%.

(Weaving)

A plain weave fabric was woven with the yarn described above as a ground yarn for the warp and weft using a water jet loom equipped with a full-width temple. At that time, the warp tension was adjusted to 0.25 cN/dtex.

At that time, the entangling yarn and the supplemental yarn were used for both selvages of the fabric. As the entangling yarn, a nylon 66 monofilament having a circular cross-sectional shape, 22 dtex, a yarn strength of 4.80 cN/dtex, an elongation of 47.5%, and a boiling water shrinkage of 10.5% was used. Two nylon 66 monofilaments were supplied to each of the selvages from a planetary device. As the supplemental yarn, a nylon 66 monofilament of 22 dtex similar to the entangling yarn was used, and four supplemental yarns were supplied to each of the selvages from bobbins.

(Scouring and Heat Setting)

Then, the obtained fabric was scoured at 65°C by an open soaper type scouring machine, washed with hot water at 40°C, and dried at 120°C. Further, the fabric was subjected to heat setting at 180°C for 60 seconds under the dimensional regulation of an overfeed rate of 1% using a pin tenter dryer with a tentering rate set so as to be as wide as the fabric after drying, thereby obtaining a fabric having a warp density of 60.1 yarns/2.54 cm and a weft density of 60.4 yarns/2.54 cm. The obtained fabric had a sum total of a crimp rate in the warp direction and a crimp rate in the weft direction of 10.8%, and a thermal resistance of 7.29 msec/(g/m$^2$), which were equivalent to those of nylon 66. In the airbag deployment test, there was no thermal melting, no opening of a sewn portion, and no bursting, and the deployment performance was good. The fabric had a moisture content of 2.1%, a post-hygrothermal tensile strength retention rate of 101.0%, and a post-hygrothermal dynamic air permeability increase rate of 10%, which were good results. The properties of the obtained fabric are shown in Table 1.

<Example 2>

A plain weave fabric was woven with the yarn of Example 1 as a ground yarn for the warp and weft using a water jet loom equipped with a full-width temple. At that time, the warp tension was adjusted to 0.20 cN/dtex. A woven fabric for airbag was produced in the same manner as in Example 1, except that the heat setting of the fabric using the pin tenter dryer was performed under the dimensional regulation of an overfeed rate of 0%, thereby obtaining a fabric having a warp density of 61.1 yarns/2.54 cm and a weft density of 58.5 yarns/2.54 cm. The obtained fabric had a sum total of a crimp rate in the warp direction and a crimp rate in the weft direction of 6.92%, and a thermal resistance of 6.21 msec/(g/m$^2$). In the airbag deployment test, slight thermal melting occurred, but there was no opening of a sewn portion and bursting, and there was no problem with the deployment performance. Further, the fabric had a moisture content of 2.2%, a post-hygrothermal tensile strength retention rate of 98.8%, and a post-hygrothermal dynamic air permeability increase rate of 10%, which were good results.

<Example 3>

A Nylon 410 resin was added with 0.30% of moisture and subjected to melt-spinning. As the warp yarn and weft yarn, the yarn was changed to a non-twisted synthetic fiber. The non-twisted synthetic fiber was composed of a polyamide 410 fiber with a 100% biomass-derived sebacic acid, had a circular cross-sectional shape, was composed of a fiber 136 filament having a single fiber fineness of 3.5 dtex, had a total fineness of 482 dtex, a yarn strength of 7.75 cN/dtex, an elongation of 22.6%, and a boiling water shrinkage of 3.7%. A plain weave fabric was woven with the yarn described above as a ground yarn for the warp and weft using a water-jet loom equipped with a full-width temple. In this case, a woven fabric for airbag was produced in the same manner as in Example 1 except that the warp tension was adjusted to 0.26 cN/dtex, and a fabric having a warp density of 50.9 yarns/2.54cm and a weft density of 50.2 yarns/2.54cm was obtained. The obtained fabric had a sum total of a crimp rate in the warp direction and a crimp rate in the weft direction of 10.5%, and a thermal resistance of 8.07 msec/(g/m$^2$). In the airbag deployment test, there was no thermal melting, no opening of a sewn portion, and no bursting, and the deployment performance was good. Further, the fabric had a moisture content of 2.4%, a post-hygrothermal tensile strength retention rate of 101.0%, and a post-hygrothermal dynamic air permeability increase rate of -11%, which were good results.

<Example 4>

A plain weave fabric was woven with the yarn of Example 3 as a ground yarn for the warp and weft using a water jet loom equipped with a full-width temple. At that time, the warp tension was adjusted to 0.21 cN/dtex. A woven fabric for airbag was produced in the same manner as in Example 1, except that the heat setting of the fabric using the pin tenter dryer was performed under the dimensional regulation of an overfeed rate of 0%, thereby obtaining a fabric having a warp density of 51.5 yarns/2.54 cm and a weft density of 48.8 yarns/2.54 cm. The obtained fabric had a sum total of a crimp rate in the warp direction and a crimp rate in the weft direction of 6.83%, and a thermal resistance of 6.97 msec/(g/m$^2$). In the airbag deployment test, slight thermal melting occurred, but there was no opening of a sewn portion and bursting, and there was no problem with the deployment performance. Further, the fabric had a moisture content of 2.4%, a post-hygrothermal tensile strength retention rate of 97.9%, and a post-hygrothermal dynamic air permeability increase rate of -10%, which were good results.

<Example 5>

A Nylon 410 resin was added with 0.6% of moisture and subjected to melt-spinning. As the warp yarn and the weft yarn, a non-twisted synthetic fiber filament was prepared. The non-twisted synthetic fiber filament was composed of a polyamide 410 fiber with a 100% biomass-derived sebacic acid (71 wt% derived from biomass), had a circular cross-sectional shape, was composed of a fiber 136 filament having a single fiber fineness of 2.7 dtex, had a total fineness of 365 dtex, a yarn strength of 6.80 cN/dtex, an elongation of 22.6%, and a boiling water shrinkage of 3.2%. Subsequent processes were carried out in the same manner as in Example 1, and a fabric having a warp density of 60.2 yarns/2.54 cm and a weft density of 59.7 yarns/2.54 cm was obtained. The obtained fabric had a sum total of a crimp rate in the warp direction and a crimp rate in the weft direction of 9.12% and a thermal resistance of 6.81 msec/(g/m$^2$), which is inferior to nylon 66. In the airbag deployment test, slight thermal melting occurred, but there was no opening of a sewn portion and bursting, and there was no problem with the deployment performance. The properties of the obtained fabric are shown in Table 1.

<Comparative Example 1>

As the warp yarn and weft yarn, the yarn was changed to a non-twisted synthetic fiber. The non-twisted synthetic fiber was composed of petroleum-derived nylon 66, had a circular cross-sectional shape, was composed of a fiber 136 filament having a single fiber fineness of 2.7 dtex, had a total fineness of 365 dtex, a yarn strength of 8.47 cN/dtex, an elongation of 24.5%, and a boiling water shrinkage of 6.2%. A plain weave fabric was woven with the yarn described above as a ground yarn for the warp and weft using a water-jet loom equipped with a full-width temple. In this case, a woven fabric for airbag was produced in the same manner as in Example 1 except that the warp tension was adjusted to 0.20 cN/dtex, and a fabric having a warp density of 59.2 yarns/2.54 cm and a weft density of 61.1 yarns/2.54 cm was obtained. The obtained fabric had a sum total of a crimp rate in the warp direction and a crimp rate in the weft direction of 6.92%, and a thermal resistance of 7.29 msec/(g/m$^2$). In the airbag deployment test, there was opening of a sewn portion, but there was no thermal melting and bursting, and there was no problem with the deployment performance. Further, the fabric had a moisture content of 3.6%, a post-hygrothermal tensile strength retention rate of 96.8%, and a post-hygrothermal dynamic air permeability increase rate of 29%, which were worse.

<Comparative Example 2>

As the warp yarn and weft yarn, the yarn was changed to a non-twisted synthetic fiber. The non-twisted synthetic fiber was composed of petroleum-derived nylon 66, had a circular cross-sectional shape, was composed of a fiber 136 filament having a single fiber fineness of 3.6 dtex, had a total fineness of 486 dtex, a yarn strength of 8.41 cN/dtex, an elongation of 24.6%, and a boiling water shrinkage of 6.4%. A plain weave fabric was woven with the yarn described above as a ground yarn for the warp and weft using a water-jet loom equipped with a full-width temple. In this case, a woven fabric for airbag was produced in the same manner as in Example 1 except that the warp tension was adjusted to 0.21 cN/dtex, and a fabric having a warp density of 49.5 yarns/2.54cm and a weft density of 50.3 yarns/2.54cm was obtained. The obtained fabric had a sum total of a crimp rate in the warp direction and a crimp rate in the weft direction of 6.93%, and a thermal resistance of 8.05 msec/(g/m$^2$). In the airbag deployment test, there was opening of a sewn portion, but there was no thermal melting and bursting, and there was no problem with the deployment performance.

Further, the fabric had a moisture content of the fabric was 3.8%, a post-hygrothermal tensile strength retention rate of 96.7%, and a post-hygrothermal dynamic air permeability increase rate of 28%, which were worse.

Table 1

| | | Unit | Example | | | | | Comparative Example | |
|---|---|---|---|---|---|---|---|---|---|
| | | | 1 | 2 | 3 | 4 | 5 | 1 | 2 |
| Kind of polymer | | - | N410 | N410 | N410 | N410 | N410 | N66 | N66 |
| Biomass ratio | | - | 71 | 71 | 71 | 71 | 71 | 0 | 0 |
| Melting point | | °C | 250 | 250 | 250 | 250 | 250 | 265 | 265 |
| Resin moisture content | | % | 0.15 | 0.15 | 0.30 | 0.30 | 0.60 | 0.13 | 0.13 |
| Sulfuric acid relative viscosity | | - | 3.5 | 3.5 | 3.5 | 3.5 | 3.0 | 3.6 | 3.6 |
| Mw/Mn | | - | 2.4 | 2.4 | 2.4 | 2.4 | 2.4 | 2.4 | 2.4 |
| Total fineness | | dtex | 362 | 362 | 482 | 482 | 365 | 365 | 486 |
| Number of filaments | | filaments | 136 | 136 | 136 | 136 | 136 | 136 | 136 |
| Yarn strength | | cN/dtex | 7.80 | 7.80 | 7.75 | 7.75 | 6.80 | 8.47 | 8.41 |
| Yarn elongation | | % | 23.0 | 23.0 | 22.6 | 22.6 | 22.6 | 24.5 | 24.6 |
| Boiling water shrinkage | | % | 3.5 | 3.5 | 3.7 | 3.7 | 3.2 | 6.2 | 6.4 |
| Woven warp yarn tension | | cN/dtex | 0.25 | 0.20 | 0.26 | 0.21 | 0.26 | 0.20 | 0.21 |
| Fabric density | Warp | yarns/ 2.54 cm | 60.1 | 61.1 | 50.9 | 51.5 | 60.2 | 59.2 | 49.5 |
| | Weft | yarns/ 2.54 cm | 60.4 | 58.5 | 50.2 | 48.8 | 59.7 | 61.1 | 50.3 |
| Total weight | | g/m$^2$ | 186 | 185 | 205 | 204 | 185 | 184 | 201 |
| Tensile strength | Warp | N/50 mm | 3104 | 3208 | 3400 | 3512 | 2826 | 3280 | 3458 |
| | Weft | N/50 mm | 3180 | 3095 | 3448 | 3388 | 2903 | 3393 | 3590 |
| Hygrothermal tensile strength | Warp | N/50 mm | 3122 | 3122 | 3425 | 3432 | 2827 | 3179 | 3341 |
| | Weft | N/50 mm | 3222 | 3102 | 3491 | 3322 | 2903 | 3274 | 3478 |
| Post-hygrothermal tensile strength retention rate | | % | 101.0 | 98.8 | 101.0 | 97.9 | 100.1 | 96.8 | 96.7 |
| Elongation | Warp | % | 41.9 | 41.0 | 36.3 | 35.9 | 38.1 | 39.4 | 35.4 |
| | Weft | % | 30.8 | 31.0 | 30.4 | 30.6 | 30.1 | 31.3 | 31.4 |
| Tear strength | Warp | N | 145 | 140 | 190 | 188 | 138 | 141 | 176 |
| | Weft | N | 140 | 151 | 191 | 196 | 136 | 140 | 186 |
| Slippage resistance | Warp | N | 538 | 521 | 511 | 505 | 525 | 621 | 472 |
| | Weft | N | 464 | 488 | 364 | 387 | 447 | 506 | 409 |
| Dynamic air permeability | | mm/s | 379 | 383 | 376 | 379 | 351 | 385 | 351 |
| Hygrothermal dynamic air permeability | | mm/s | 416 | 420 | 334 | 340 | 350 | 495 | 448 |
| Post-hygrothermal dynamic air permeability increase rate | | % | 10 | 10 | -11 | -10 | 0 | 29 | 28 |

(continued)

| | | Unit | Example | | | | | Comparative Example | |
|---|---|---|---|---|---|---|---|---|---|
| | | | 1 | 2 | 3 | 4 | 5 | 1 | 2 |
| Bending resistance | Warp | N | 14.5 | 14.6 | 12.0 | 13.0 | 14.0 | 13.9 | 11.9 |
| | Weft | N | 14.7 | 14.2 | 14.5 | 14.1 | 13.5 | 13.4 | 13.5 |
| Crimp rate | Warp | % | 7.11 | 3.90 | 6.69 | 3.90 | 6.10 | 4.00 | 3.91 |
| | Weft | % | 3.72 | 3.02 | 3.81 | 2.93 | 3.02 | 2.92 | 3.02 |
| Total of warp and weft crimp rates | | % | 10.8 | 6.92 | 10.5 | 6.83 | 9.12 | 6.92 | 6.93 |
| Thermal resistance | | msec/ $(g/m^2)$ | 7.29 | 6.21 | 8.07 | 6.97 | 6.81 | 7.29 | 8.05 |
| Moisture content of fabric | | % | 2.1 | 2.2 | 2.4 | 2.4 | 2.0 | 3.6 | 3.8 |
| Deployment test | | | Excellent | Pass | Excellent | Pass | Pass | Good | Good |

**Claims**

1. A woven fabric for airbag, comprising a polyamide 410 fiber.

2. The woven fabric for airbag according to claim 1, wherein a sum total of a crimp rate in a warp direction and a crimp rate in a weft direction is 7.00 to 25.0%.

3. The woven fabric for airbag according to claim 2, wherein a melt fall time per total weight in a heat resistance test of allowing an iron rod heated to 350°C to fall onto a base fabric is 7.00 to 20.0 msec/$(g/m^2)$.

4. The woven fabric for airbag according to any one of claims 1 to 3, wherein a dynamic air permeability increase rate of the fabric after a hygrothermal treatment for 408 hours under conditions with a temperature of 70°C and a humidity of 95% RH is 25% or less.

5. The woven fabric for airbag according to any one of claims 1 to 4, wherein a tensile strength retention rate of the fabric after a hygrothermal treatment for 408 hours under conditions with a temperature of 70°C and a humidity of 95% RH is 97.0% or more.

6. The woven fabric for airbag according to any one of claims 1 to 5, wherein a moisture content of the fabric as measured in accordance with JIS L 1096:2010 8.10 is more than 0.5% and 2.5% or less.

7. The woven fabric for airbag according to any one of claims 1 to 6, wherein the polyamide 410 fiber contains a polyamide synthesized from a biomass-derived monomer, and a content of the polyamide synthesized from the biomass-derived monomer is 25 wt% or more in the polyamide 410 fiber.

8. An airbag comprising the woven fabric for airbag of any one of claims 1 to 7.

## INTERNATIONAL SEARCH REPORT

| International application No. |
| --- |
| **PCT/JP2022/033132** |

### A. CLASSIFICATION OF SUBJECT MATTER

*D03D 1/02*(2006.01)i; *B60R 21/235*(2006.01)i; *D01F 6/60*(2006.01)i; *D03D 15/283*(2021.01)i
FI: D03D1/02 ZAB; B60R21/235; D01F6/60 351Z; D03D15/283

According to International Patent Classification (IPC) or to both national classification and IPC

### B. FIELDS SEARCHED

Minimum documentation searched (classification system followed by classification symbols)

D03D1/00-27/18; B60R21/16-21/33; D01F6/60

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2021/008942 A1 (PHP FIBERS GMBH) 21 January 2021 (2021-01-21) claims, example 1 | 1, 4-8 |
| Y | | 2, 3 |
| Y | WO 2017/010458 A1 (TORAY INDUSTRIES, INC.) 19 January 2017 (2017-01-19) examples | 2, 3 |
| Y | WO 2019/167820 A1 (TOYOBO CO., LTD.) 06 September 2019 (2019-09-06) examples | 2, 3 |
| A | JP 2013-49930 A (TORAY INDUSTRIES, INC.) 14 March 2013 (2013-03-14) claims, paragraph [0056] | 1-8 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 September 2022** | **11 October 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/033132**

| Patent document cited in search report | | | Publication date (day/month/year) | Patent family member(s) | | | Publication date (day/month/year) |
|---|---|---|---|---|---|---|---|
| WO | 2021/008942 | A1 | 21 January 2021 | US | 2022/0259775 | A1 | |
| | | | | claims, example 1 | | | |
| | | | | JP | 2022-539612 | A | |
| | | | | CN | 114096702 | A | |
| | | | | KR | 10-2022-0034125 | A | |
| WO | 2017/010458 | A1 | 19 January 2017 | EP | 3323919 | A1 | |
| | | | | examples | | | |
| | | | | US | 2018/0208147 | A1 | |
| | | | | CN | 107709641 | A | |
| | | | | KR | 10-2018-0030058 | A | |
| | | | | MX | 2018000440 | A | |
| | | | | BR | 112018000619 | A | |
| WO | 2019/167820 | A1 | 06 September 2019 | EP | 3760775 | A1 | |
| | | | | examples | | | |
| | | | | US | 2021/0040655 | A1 | |
| | | | | US | 2022/0118937 | A1 | |
| | | | | WO | 2020/153446 | A1 | |
| | | | | EP | 3916139 | A1 | |
| | | | | CN | 111801454 | A | |
| | | | | CN | 113330150 | A | |
| JP | 2013-49930 | A | 14 March 2013 | (Family: none) | | | |

Form PCT/ISA/210 (patent family annex) (January 2015)

**EP 4 400 639 A1**

**Patent documents cited in the description**

- JP 2013528719 A
- JP 2013049930 A
- WO 2009119302 A1
- JP 2017020126 A
- WO 2021008942 A1